# FASCICULE DE BREVET EUROPEEN

(11) **EP 3 671 980 B1**
(45) Date de publication et mention de la délivrance du brevet: **07.09.2022**
(21) Numéro de dépôt: 19214912.8
(22) Date de dépôt: 10.12.2019
(51) Int. Cl.: H01R 43/28, G01B 5/00, G01B 5/02, H02G 15/02, H02G 1/12

(54) **EQUIPEMENT ELECTRIQUE COMPRENANT UN DISPOSITIF DE VERIFICATION DU DENUDAGE D'UN CABLE ET PROCEDE DE CONNEXION D'UN CABLE À UN EQUIPEMENT ELECTRIQUE**
ELEKTRISCHES GERÄT, DAS EINE ÜBERPRÜFUNGSVORRICHTUNG FÜR DIE ABISOLIERUNG VON KABELN UMFASST UND VERFAHREN ZUM ANSCHLIESSEN EINES KABELS AN EIN ELEKTRISCHES GERÄT
ELECTRICAL EQUIPMENT COMPRISING A DEVICE FOR VERIFYING THE STRIPPING OF A CABLE AND METHOD OF CONNECTING A CABLE TO AN ELECTRICAL EQUIPMENT

(30) Priorité: 21.12.2018 FR 1873940
(43) Date de publication de la demande: 24.06.2020
(73) Titulaire: Sagemcom Energy & Telecom SAS, 92500 Rueil-Malmaison (FR)
(72) Inventeur: ROLLAND, Patrick, 92500 RUEIL MALMAISON (FR); GRINCOURT, Christophe, 92500 RUEIL MALMAISON (FR); FORJA, Christian, 92500 RUEIL MALMAISON (FR)
(74) Mandataire: Lavaud, Thomas

(56) Documents cités:
- WO-A1-2018/116471
- Anonymous: "Wago 273-105 Borne pour boîtes de dérivation pour 5 conducteurs section 2,5 mm2: Amazon.fr: Commerce, Industrie & Science", , 13 November 2008 (2008-11-13), XP055794033, Retrieved from the Internet: URL:https://www.amazon.fr/Wago-273-105-dér ivation-conducteurs-section/dp/B001L5SM58 [retrieved on 2021-04-09]

## Description

L'invention cencerne le domaine des équipements électrique comprenant un dispositif de vérification du dénudage d'un câble.

### ARRIERE PLAN DE L'INVENTION

Un compteur électrique permet de mesurer la consommation d'énergie électrique d'une installation électrique d'un utilisateur. L'énergie électrique est fournie à l'installation électrique par un réseau de distribution.

Un compteur électrique de l'art antérieur comporte ainsi classiquement un boîtier raccordé à la fois au réseau de distribution et à l'installation électrique, dans lequel sont intégrés des moyens de mesure de l'énergie électrique consommée (capteur(s) de courant, de tension, etc.).

Le compteur électrique comprend classiquement un couvre-bornes qui est équipé éventuellement d'un dispositif de scellement. Le couvre-bornes peut être démonté uniquement par un opérateur travaillant pour le distributeur d'énergie électrique ou pour un gestionnaire du réseau de distribution. Le couvre-bornes empêche l'utilisateur d'accéder aux connecteurs (cages à vis) et aux câbles de puissance raccordant le compteur électrique au réseau de distribution, et assure ainsi la sécurité de l'utilisateur. Le couvre-bornes forme aussi un dispositif d'anti-fraude qui empêche un individu fraudeur de court-circuiter ou de dériver intentionnellement une ou des phases de la ligne du réseau de distribution.

Lors de l'installation du compteur électrique par l'opérateur, celui-ci démonte le couvre-bornes pour raccorder le compteur électrique aux câbles de puissance. Le couvre-bornes est remonté une fois que la mise en service du compteur électrique est effectuée.

Pour des raisons de sécurité, il est essentiel que ces câbles de puissance soient dénudés correctement, selon des critères de longueur définis par le distributeur d'énergie électrique ou par le gestionnaire du réseau de distribution.

En effet, si la portion dénudée d'un câble de puissance est trop longue, il existe un risque que la distance entre une phase et le neutre soit trop faible au niveau des cages à vis du compteur électrique, ce qui pourrait créer un arc électrique sous certaines conditions d'utilisation, notamment lorsque l'humidité ambiante est importante.

De même, si la portion dénudée d'un câble de puissance est trop courte, il est possible que le câble de puissance ne soit pas suffisamment maintenu dans la cage à vis à laquelle il est connecté. Cette situation risque de provoquer des arcs électriques.

Les borniers Wago^{®} 273-105 ("Wago 273-105 Borne pour boites de dérivation pour 5 conducteurs section 2,5 mm2: Amazon.fr: Commerce, Industrie & Science", 13 novembre 2008 (2008-11-13), Extrait de l'Internet:URL:https://www.amazon.fr/Wago-273-105-dérivation-conducteurs-section/dp/B001L5SM58 [extrait le 2021-04-09]) comprennent une toise permettant de vérifier la longueur du dénudage d'un fil électrique.

### OBJET DE L'INVENTION

L'invention a pour objet d'améliorer de manière simple et peu coûteuse la sécurité d'un équipement électrique, tel qu'un compteur électrique, auquel peut être connectée une portion dénudée d'un câble.

### RESUME DE L'INVENTION

En vue de la réalisation de ce but, on propose un équipement électrique selon la revendication 1.

Le dispositif de vérification de l'équipement électrique selon l'invention forme donc un calibre, simple d'utilisation, permettant de vérifier que la longueur de la portion dénudée du câble est correcte, et donc d'améliorer la sécurité de l'équipement électrique.

Le dispositif de vérification est formé directement sur une pièce de boîtier de l'équipement électrique. Un opérateur, pour réaliser la vérification, n'a donc pas besoin d'un outil particulier. La mise en œuvre de la vérification ne peut donc pas être compromise par un éventuel oubli de l'outil par l'opérateur, ce qui améliore la probabilité que ladite vérification soit bien effectuée.

Le dispositif de vérification est très facile à utiliser, puisqu'il suffit de positionner la portion dénudée du câble dans le premier espace d'accueil et de comparer visuellement la position du deuxième élément de câble et la position du repère pour effectuer cette vérification.

Le dispositif de vérification est très simple et peut être fabriqué par moulage en même temps que la pièce de boîtier. Le dispositif de vérification est donc très peu coûteux.

Selon l'invention, le premier espace d'accueil est une première cavité pratiquée sur une face de la pièce de boîtier.

On propose aussi un équipement électrique tel que celui qui vient d'être décrit, dans lequel le dispositif de vérification comprend un premier élément de boîtier et un deuxième élément de boîtier qui peuvent chacun former la butée ou le repère.

On propose aussi un équipement électrique tel que celui qui vient d'être décrit, dans lequel le premier élément de boîtier est un fond de la cavité et le deuxième élément de boîtier est un bord de la pièce de boîtier.

On propose de plus un équipement électrique tel que celui qui vient d'être décrit, dans lequel, lorsque la longueur de la portion dénudée est supérieure à la longueur de référence, le fond de la cavité forme la butée et le bord de la pièce de boîtier forme le repère, et dans lequel, lorsque la longueur de la portion dénudée est inférieure à la longueur de référence, le fond de la cavité forme le repère et le bord de la pièce de boîtier forme la butée.

Selon l'invention, la forme de la première cavité est une portion de cylindre coupé par un plan parallèle à un axe du cylindre, de sorte que la première cavité présente une forme complémentaire de la forme de la portion dénudée du câble.

On propose par ailleurs un équipement électrique tel que celui qui vient d'être décrit, dans lequel des rainures longitudinales parallèles à l'axe du cylindre sont formées dans la première cavité.

On propose de plus un équipement électrique tel que celui qui vient d'être décrit, comprenant en outre une deuxième cavité ayant une largeur supérieure à celle de la première cavité, la deuxième cavité formant un deuxième espace d'accueil agencé pour accueillir une portion non dénudée du câble lorsque la portion dénudée est positionnée dans la première cavité, le premier élément de boîtier étant un épaulement de boîtier formé à la limite entre la première cavité et la deuxième cavité, et le deuxième élément de boîtier étant un bord de la pièce de boîtier.

On propose de plus un équipement électrique tel que celui qui vient d'être décrit, la pièce de boîtier étant une pièce amovible.

On propose aussi un équipement électrique tel que celui qui vient d'être décrit, l'équipement électrique étant un compteur électrique.

On propose en outre un équipement électrique tel que celui qui vient d'être décrit, la pièce de boîtier étant un couvre-bornes.

On propose aussi un procédé de connexion d'un câble à un équipement électrique selon la revendication 1. Ce procédé est décrit dans la revendication 10.

L'invention sera mieux comprise à la lumière de la description qui suit de modes de mise en œuvre particuliers non limitatifs de l'invention.

### BREVE DESCRIPTION DES DESSINS

Il sera fait référence aux dessins annexés, parmi lesquels :
[Fig. 1] la figure 1 est une vue en perspective d'un équipement électrique selon un premier mode de réalisation de l'invention, l'équipement électrique étant un compteur électrique ;
[Fig. 2] la figure 2 est une vue en perspective d'un couvre-bornes du compteur électrique, une portion dénudée d'un câble étant positionnée dans un dispositif de vérification formé sur le couvre-bornes, la portion dénudée étant trop longue ;
[Fig. 3] la figure 3 est une vue similaire à la figure 2, la portion dénudée du câble étant trop courte ;
[Fig. 4] la figure 4 est une vue en perspective d'un équipement électrique selon un deuxième mode de réalisation de l'invention, l'équipement électrique étant un compteur électrique ;
[Fig. 5] la figure 5 est une vue en perspective d'un couvre-bornes du compteur électrique, une portion dénudée d'un câble étant positionnée dans un dispositif de vérification formé sur le couvre-bornes, la portion dénudée étant trop longue ;
[Fig. 6] la figure 6 est une vue similaire à la figure 5, une pince utilisée pour couper l'excédent de longueur de la portion dénudée étant représentée ;
[Fig. 7] la figure 7 est une vue similaire à la figure 5, la portion dénudée étant insérée dans le dispositif de vérification selon un sens opposé à celui de la figure 7, la portion dénudée ayant la bonne longueur ;
[Fig. 8] la figure 8 est une vue en perspective d'un couvre-bornes du compteur électrique selon une variante de réalisation.

### DESCRIPTION DETAILLEE DE L'INVENTION

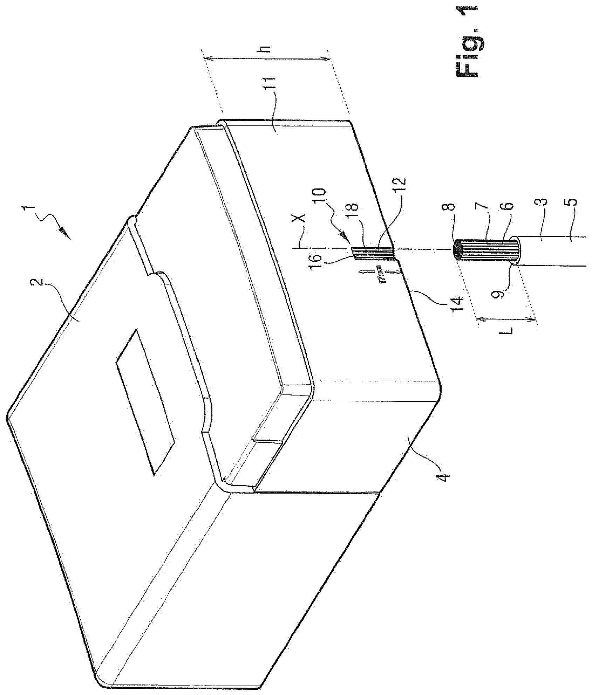

En référence aux figures 1 à 3, l'équipement électrique selon un premier mode de réalisation de l'invention est ici un compteur électrique 1. Le compteur électrique 1 est destiné à mesurer la consommation électrique d'une installation électrique qui est alimentée par un réseau de distribution.

Le compteur électrique 1 comporte un boîtier 2 dans lequel sont intégrés des moyens de mesure de l'énergie électrique consommée (capteur(s) de courant, de tension, etc.), et des connecteurs (cages à vis). Chaque connecteur comprend une cage à vis qui permet de raccorder au compteur électrique 1 un câble de puissance 3 du réseau de distribution.

Le boîtier 2 comprend un couvre-bornes 4. Le couvre-bornes 4 est une pièce amovible. Le couvre-bornes 4 ne peut être démonté que par un opérateur du distributeur d'énergie électrique ou du gestionnaire du réseau de distribution. Le couvre-bornes 4 permet d'empêcher un utilisateur d'accéder aux connecteurs.

Chaque câble 3 comprend une gaine 5 et un conducteur électrique 6 entouré par la gaine 5. La gaine 5 est une enveloppe isolante fabriquée par exemple avec un polymère tel que le polyéthylène ou l'éthylène-propylène. Le conducteur électrique 6, ou « âme » du câble 3, comprend ici une pluralité de brins conducteurs fabriqués par exemple en cuivre, en acier ou en aluminium.

Pour connecter un tel câble 3 à un connecteur du compteur électrique 1, il convient de dénuder le câble 3. On obtient ainsi une portion dénudée 7 du câble 3, qui est entièrement ou partiellement insérée dans la cage à vis et serrée par la vis de serrage de la cage à vis.

La portion dénudée 7 du câble 3 s'étend entre une extrémité libre 8 du câble 3 et un épaulement 9 du câble 3 formé par une extrémité sectionnée de la gaine 5.

Comme on l'a vu plus tôt, il est très important, pour des raisons de sécurité, d'assurer que la longueur L de la portion dénudée 7 soit égale à une longueur de référence. La longueur de référence est ici égale à 17mm. Cette longueur de référence est définie par des normes ou directives définies et imposées par le distributeur d'énergie électrique ou par le gestionnaire du réseau de distribution.

Un dispositif de vérification 10 de la longueur de la portion dénudée 7 du câble 3 est formé sur une face avant 11 du couvre-bornes 4. On note que le dispositif de vérification pourrait aussi être positionné sur une autre face du couvre-bornes 4, par exemple sur une face intérieure du couvre-bornes.

Le dispositif de vérification 10 comprend un premier espace d'accueil.

Le premier espace d'accueil est une première cavité 12 pratiquée sur la face avant 11 du couvre-bornes 4. La première cavité 12 à la forme d'une portion de cylindre de section circulaire et d'axe X, ledit cylindre étant coupé par un plan parallèle à l'axe X. Le cylindre a un rayon légèrement supérieur au rayon de la portion dénudée 7, c'est-à-dire au rayon du conducteur électrique 6.

La première cavité 12 a une longueur égale à la longueur de référence, c'est-à-dire ici à 17mm.

L'axe X est parallèle à une hauteur h de la face avant 11 du couvre-bornes 4. La première cavité 12 s'étend donc parallèlement à la hauteur h du couvre-bornes 4 depuis un bord 14 du couvre-bornes 4.

La profondeur de la première cavité 12 est ici égale à la moitié du rayon de la section du cylindre. La profondeur est ici comprise entre 1 et 2mm, et est avantageusement égale à 1,5mm.

Le dispositif de vérification 10 comprend un premier élément de boîtier, en l'occurrence un fond 16 de la première cavité 12, et un deuxième élément de boîtier, en l'occurrence le bord 14 du couvre-bornes 4. Le fond 16 et le bord 14 délimitent la première cavité 12 en longueur, de sorte qu'ils sont espacés de la longueur de référence.

On décrit maintenant le fonctionnement de l'invention.

Au moment de l'installation du compteur électrique 1, l'opérateur dénude les câbles 3 du réseau de distribution, qui doivent être connectés au compteur électrique 1.

Puis, l'opérateur démonte le couvre-bornes 4 pour accéder aux connecteurs du compteur électrique 1.

Pour chaque câble 3, l'opérateur utilise le dispositif de vérification 10 du couvre-bornes 4 pour vérifier que la longueur L de la portion dénudée 7 est égale à la longueur de référence.

L'opérateur saisit dans une main le couvre-bornes 4, saisit le câble 3 dans son autre main, et insère la portion dénudée 7 du câble 3 dans le premier espace d'accueil, c'est-à-dire dans la première cavité 12.

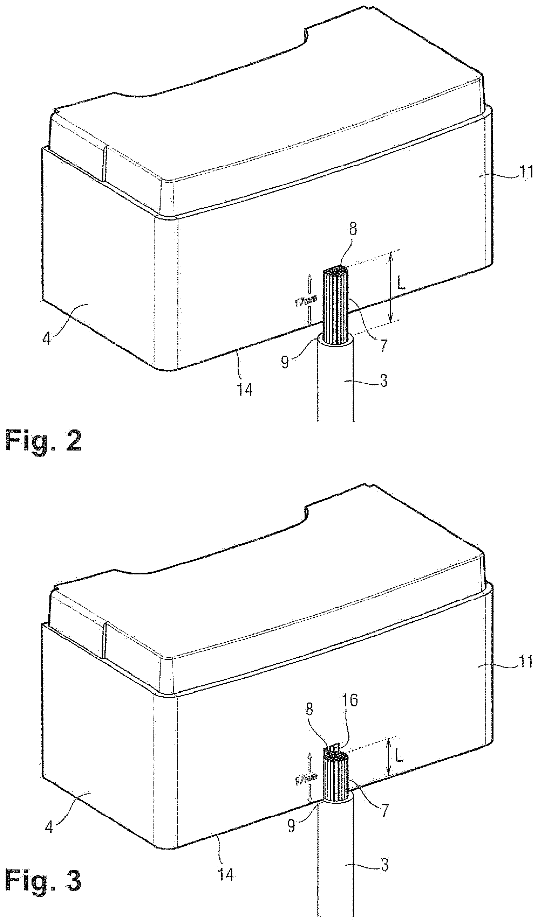

Comme on le voit sur la figure 2, lorsque la portion dénudée 7 est insérée dans la première cavité 12, si la portion dénudée 7 est trop longue, l'extrémité libre 8 du câble 3 vient en appui contre le fond 16 de la première cavité 12. L'épaulement 9 du câble 3, quant à lui, est positionné au-dessus du bord 14 du couvre-bornes 4, c'est-à-dire que l'épaulement 9 du câble 3 ne se trouve pas au niveau du bord 14 du couvre-bornes 4, mais que la portion dénudée 7 dépasse du bord 14 du couvre-bornes 4 et que l'épaulement 9 du câble 3 est situé au-delà du bord 14 du couvre-bornes 4.

L'écart entre la position de l'épaulement 9 du câble 3 et le bord 14 du couvre-bornes 4 permet d'évaluer la longueur en trop de la portion dénudée 7.

Le fond 16 de la première cavité 12 forme donc une butée contre laquelle vient en appui un premier élément de câble, qui est en l'occurrence l'extrémité libre 8 du câble 3. Le bord 14 du couvre-bornes 4 forme un repère qui permet à l'opérateur d'effectuer une comparaison visuelle entre la position d'un deuxième élément de câble, en l'occurrence de l'épaulement 9 du câble 3, et la position du repère, et donc entre la longueur de la portion dénudée 7 du câble 3 et la longueur de référence.

Ici, comme l'opérateur voit que la portion dénudée 7 est trop longue, l'opérateur réduit la longueur de la portion dénudée 7 en la coupant à proximité de l'extrémité libre 8 du câble 3. Il vérifie à nouveau que la longueur de la portion dénudée 7 du câble 3 correspond bien à la longueur de référence et, si c'est le cas, il connecte la portion dénudée 7 du câble 3 au connecteur correspondant du compteur électrique 1.

Par contre, comme cela est visible sur la figure 3, si la portion dénudée 7 est trop courte, c'est l'épaulement 9 du câble 3 qui vient en appui contre le bord 14 du couvre-bornes 4.

L'écart entre la position de l'extrémité libre 8 du câble 3 et le fond 16 de la première cavité 12 permet d'évaluer la longueur manquante de la portion dénudée 7.

Cette fois, le bord 14 du couvre-bornes 4 forme une butée contre laquelle vient en appui un premier élément de câble, qui est l'épaulement 9 du câble 3. Le fond 16 de la première cavité 12 forme un repère qui permet à l'opérateur d'effectuer une comparaison visuelle entre la position d'un deuxième élément de câble, qui est l'extrémité libre 8 du câble 3, et la position du repère.

L'opérateur augmente alors la longueur de la portion dénudée 7 en dénudant à nouveau le câble 3. Il vérifie à nouveau que la longueur de la portion dénudée 7 du câble 3 correspond bien à la longueur de référence et, si c'est le cas, il connecte la portion dénudée 7 du câble 3 au connecteur correspondant du compteur électrique 1.

On note que la forme de la première cavité 12, qui est une portion de cylindre de rayon légèrement supérieur à celui de la portion dénudée 7, est complémentaire de la forme de la portion dénudée 7. La portion dénudée 7 du câble 3 se positionne donc très facilement et de manière très pratique dans la première cavité 12.

On note de plus que des rainures longitudinales 18, parallèles à l'axe X du cylindre, sont formées dans la première cavité 12. Ces rainures 18 améliorent le maintien de la portion dénudée 7 dans la première cavité 12, et définissent une forme qui ressemble aux brins du conducteur électrique 6 du câble 3. Intuitivement, l'opérateur comprend de quelle manière il faut positionner la portion dénudée 7 pour vérifier sa longueur.

On note que le couvre-bornes 4, une fois démonté, est une pièce « libre », de faible encombrement, de faible masse, et donc très facilement manipulable. Le couvre-bornes 4 est utilisé ici comme un outil de vérification de la longueur de la portion dénudée 7. Cet outil est simple d'utilisation et très intuitif. Par ailleurs, comme l'outil est formé par le couvre-bornes 4 lui-même, il est très peu onéreux et il évite à l'opérateur de devoir utiliser et transporter en permanence un outil spécifique pour aboutir à un niveau de précision équivalent.

On précise par ailleurs que le dispositif de vérification selon l'invention 10 est beaucoup plus fiable qu'un simple index qui serait marqué sur le couvre-bornes par gravure. Un tel index pourrait par exemple être une double flèche ayant une longueur égale à la longueur de référence et s'étendant depuis un bord du couvre-bornes parallèlement à une hauteur de celui-ci.

L'homme de l'art sait qu'il est important d'assurer que cette gravure n'excède pas 0,2mm de surépaisseur, afin de faciliter le démoulage et le remplissage de la forme de l'index au moment de la fabrication du couvre-bornes.

Ce marquage par gravure ne permet pas d'assurer une vérification fiable du dénudage du câble.

En effet, il est possible que la comparaison visuelle entre la longueur de l'index et la longueur de la portion dénudée du câble soit erronée à cause d'un défaut de parallaxe lors de la lecture par l'opérateur.

De plus, la faible épaisseur de la gravure, à laquelle s'ajoute un manque de contraste, rend la gravure difficile à distinguer par rapport au reste du couvre-bornes et du boîtier du compteur électrique. La vérification n'est donc pas fiable, en particulier lorsque le compteur électrique est sale ou bien est positionné dans une pièce avec peu de lumière.

On précise aussi que le dispositif de vérification selon l'invention 10 est beaucoup plus fiable qu'un simple index qui serait marqué sur le couvre-bornes par impression encrée. Un tel index pourrait à nouveau être une double flèche ayant une longueur égale à la longueur de référence et s'étendant depuis un bord du couvre-bornes parallèlement à une hauteur de celui-ci.

Cependant, un tel index risque d'être trop fin, mal imprimé, et peut s'altérer dans le temps. Par ailleurs, cette solution est relativement coûteuse car elle doit être effectuée par reprise de pièces. Elle nécessite par ailleurs que des précautions de stockage particulières soient prises lors du transport des pièces imprimées afin de les protéger.

Le dispositif de vérification 10 est donc plus fiable et moins coûteux que les deux solutions qui viennent d'être décrites brièvement (gravure et impression).

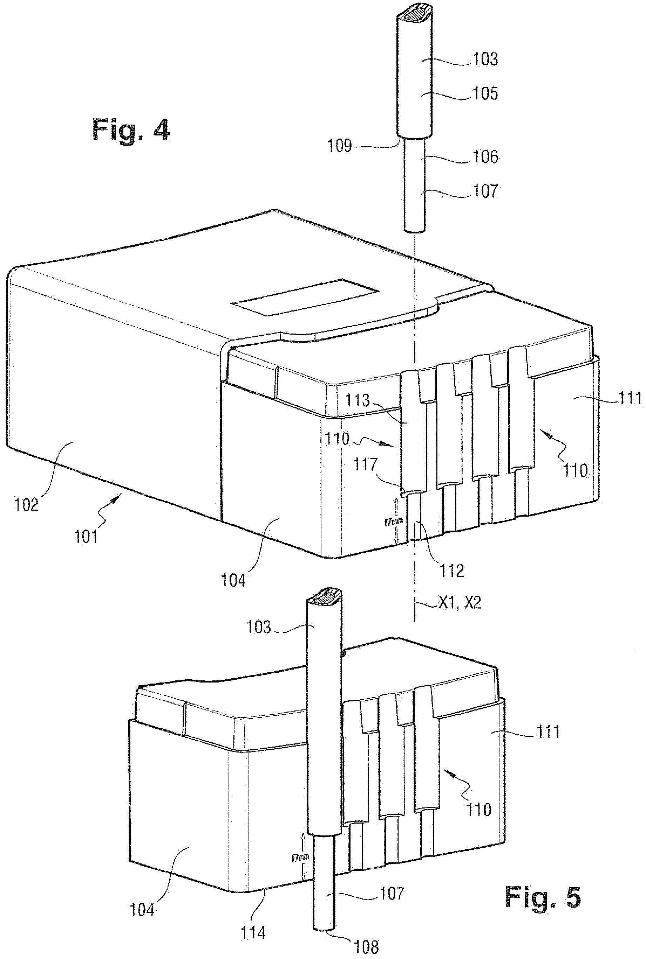

En référence aux figures 4 à 8, l'équipement électrique selon un deuxième mode de réalisation de l'invention est à nouveau un compteur électrique 101. Le compteur électrique 101 comporte un boîtier 102 comprenant un couvre-bornes 104 amovible.

Le couvre-bornes 104 comprend un dispositif de vérification 110 d'une longueur L de la portion dénudée 107 d'un câble 103.

Le dispositif de vérification 110 comprend un premier espace d'accueil et un deuxième espace d'accueil.

Le premier espace d'accueil est une première cavité 112 pratiquée sur la face avant 111 du couvre-bornes 104. La forme de la première cavité 112 est une portion de premier cylindre coupé par un plan parallèle à un axe X1 du premier cylindre. L'axe X1 est parallèle à la hauteur de la face avant 111 du couvre-bornes 104. La première cavité 112 s'étend parallèlement à la hauteur du couvre-bornes 104 depuis un bord 114 du couvre-bornes 104.

La première cavité 112 a une longueur égale à la longueur de référence, c'est-à-dire ici à 17mm.

Le premier cylindre a un rayon légèrement supérieur au rayon de la portion dénudée 107, c'est-à-dire au rayon du conducteur électrique 106 du câble 103.

Le deuxième espace d'accueil est une deuxième cavité 113 pratiquée sur la face avant 111 du couvre-bornes 104. La forme de la deuxième cavité 113 est une portion de cylindre coupé par un plan parallèle à un axe du cylindre. La deuxième cavité 113 s'étend parallèlement à la hauteur du couvre-bornes 104 depuis une première extrémité de la première cavité 112 qui est opposée au bord 114 du couvre-bornes 104.

L'axe X2 est confondu avec l'axe X1, de sorte que la première cavité 112 et la deuxième cavité 113 sont coaxiales.

Le deuxième cylindre a un rayon légèrement supérieur au rayon du câble 103 incluant la gaine 105.

Le rayon du deuxième cylindre est donc plus important que celui du premier cylindre de sorte qu'un épaulement de boîtier 117 est formé à la limite entre la première cavité 112 et la deuxième cavité 113 : la première cavité 112 débouche dans la deuxième cavité 113 en s'élargissant.

La profondeur de la première cavité 112 est semblable à celle de la première cavité 12 du premier mode de réalisation. La profondeur de la deuxième cavité 113 est supérieure à celle de la première cavité 112 : le rapport entre la profondeur de la première cavité 112 et la profondeur de la deuxième cavité 113 est ici égal au rapport entre le rayon du premier cylindre et le rayon du deuxième cylindre (mais cela n'est pas nécessaire).

L'épaulement de boîtier 117 et le bord 114 délimitent la première cavité 112 en longueur, de sorte qu'ils sont espacés de la longueur de référence.

La première cavité 112 est à nouveau destinée à accueillir la portion dénudée 107 du câble 103. La deuxième cavité 113 est destinée à accueillir une portion non dénudée du câble 103.

Lorsque l'opérateur a dénudé le câble 103, il positionne la portion dénudée 107 du câble 103 dans la première cavité 112, une portion non dénudée du câble 103 dans la deuxième cavité 113, et il amène l'épaulement 109 du câble 103 en butée contre l'épaulement de boîtier 117.

Si la longueur de la portion dénudée 107 est trop importante, comme cela est le cas sur la figure 5, l'extrémité libre 108 du câble dépasse du bord 114 du couvre-bornes 104 (c'est-à-dire de la deuxième extrémité de la première cavité 112 qui est opposée à la deuxième cavité 113).

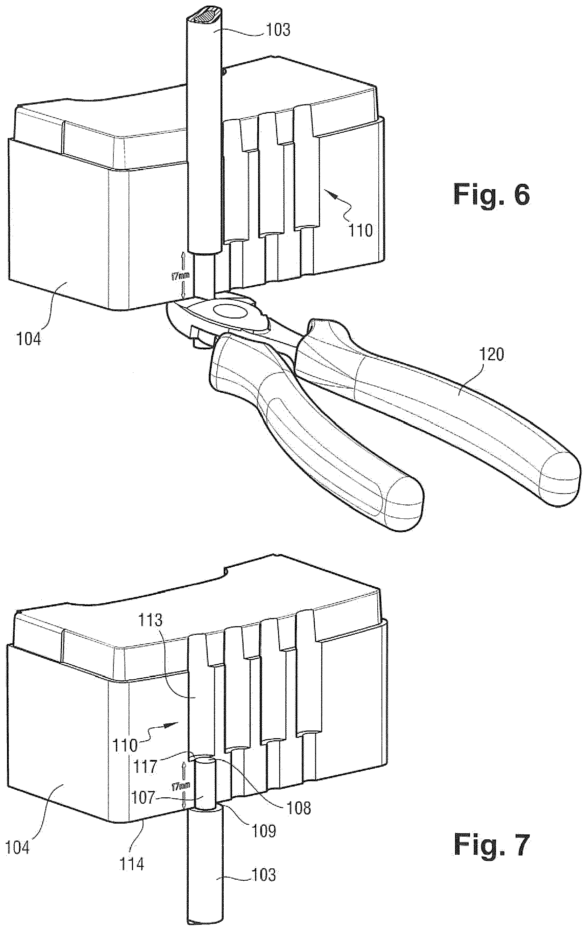

En référence à la figure 6, l'opérateur peut alors, avec une pince 120, couper le bout de l'extrémité libre 108 du câble 103 qui dépasse du bord 114 pour que la longueur de la portion dénudée 107 soit égale à la longueur de référence (c'est-à-dire à la longueur de la première cavité 112).

Ici, l'épaulement de boîtier 117 forme donc une butée contre laquelle est positionné un premier élément de câble, en l'occurrence l'épaulement 109 du câble 103. Le bord 114 du couvre-bornes 104 forme quant à lui un repère qui permet une comparaison visuelle entre la position d'un deuxième élément de câble, en l'occurrence de l'extrémité libre 108 du câble 103, et la position du repère, et donc entre la longueur de la portion dénudée 107 du câble 103 et la longueur de référence.

Alternativement, en référence à la figure 7, lorsque l'opérateur a dénudé le câble 103, il peut aussi insérer l'extrémité 108 du câble 103 dans la première cavité 112 depuis le bord 114 du couvre-bornes 104, c'est-à-dire via la deuxième extrémité de la première cavité 112. Il amène alors l'épaulement 109 du câble 103 en butée contre le bord 114 du couvre-bornes 104. La portion non dénudée du câble 103 est donc située à l'extérieur du couvre-bornes 104 et la portion dénudée 107 est positionnée dans la première cavité 112 du dispositif de vérification 110 (ainsi que dans la deuxième cavité 113 si la portion dénudée 107 est assez longue).

Sur la figure 7, on voit que la portion dénudée 107 du câble 103 arrive précisément au niveau de l'épaulement de boîtier 117, ce qui signifie que la longueur de la portion dénudée 107 est égale à la longueur de référence, et est donc correcte.

Ici, le bord 114 du couvre-bornes 104 forme donc une butée contre laquelle est positionné un premier élément de câble, en l'occurrence l'épaulement 109 du câble 103. L'épaulement de boîtier 117 forme quant à lui un repère qui permet une comparaison visuelle entre la position d'un deuxième élément de câble, en l'occurrence de l'extrémité libre 108 du câble 103, et la position du repère, et donc entre la longueur de la portion dénudée 107 du câble 103 et la longueur de référence.

Comme on le voit sur les figures 4 à 8, on peut prévoir que la face du couvre-bornes comporte non pas un mais une pluralité de dispositifs de vérification 110.

Les dispositifs de vérification 110 peuvent être tous identiques, comme c'est le cas sur les figures 4 à 7, et être utilisés par l'opérateur pour vérifier en même temps tous les câbles 103 provenant du réseau de distribution. Par exemple, si la ligne raccordée au compteur est une ligne triphasée comprenant trois câbles de phase et un câble de neutre, on peut avoir quatre dispositifs de vérification 110 identiques destinés chacun à vérifier la longueur de la portion dénudée 107 d'un câble 103.

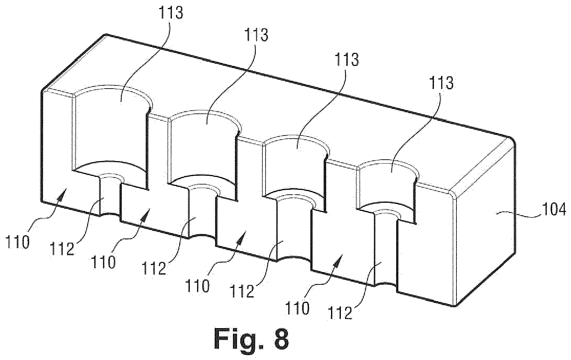

En référence à la figure 8, on pourrait aussi avoir plusieurs dispositifs de vérification 110 ayant des dimensions différentes. Par exemple, la longueur, la largeur et la profondeur de la deuxième cavité 113 peuvent varier, notamment pour prendre en compte différents diamètres du câble et/ou différentes épaisseurs de la gaine.

La largeur et la profondeur de la première cavité 112 peuvent elles aussi varier selon les dispositifs de vérification 110, pour prendre en compte différents diamètres du conducteur électrique du câble.

La longueur de la première cavité 112 pourrait elle aussi être différente selon les dispositifs de vérification 110, dans le cas où la longueur de référence peut varier, par exemple selon le type de câble ou bien selon le type de compteur électrique. Dans ce cas, on pourrait parfaitement prévoir d'ajouter des indications sur le couvre-bornes 104 pour expliquer quel dispositif de vérification utiliser en fonction des circonstances.

Bien sûr, il serait aussi possible, dans le premier mode de réalisation de l'invention, d'avoir plusieurs dispositifs de vérification ayant éventuellement des dimensions différentes.

Bien entendu, l'invention n'est pas limitée aux modes de réalisation décrits mais englobe toute variante entrant dans le champ de l'invention telle que définie par les revendications.

L'équipement électrique dans lequel est mise en œuvre l'invention n'est pas nécessairement un compteur électrique, mais pourrait être un autre équipement auquel est susceptible d'être raccordée une portion dénudée d'un câble. La pièce de boîtier sur laquelle est formé le dispositif de vérification n'est pas nécessairement amovible.

## Revendications

1. Equipement électrique (1 ; 101) comportant un boîtier (2 ; 102) et un connecteur auquel peut être connectée une portion dénudée (7 ; 107) d'un câble (3 ; 103) qui comprend un conducteur électrique (6 ; 106) entouré par une gaine (5 ; 105), ladite portion dénudée s'étendant entre une extrémité libre (8 ; 108) du câble et un épaulement (9 ; 109) du câble formé par une extrémité sectionnée de la gaine, le boîtier comprenant une pièce de boîtier (4 ; 104) sur laquelle est formé un dispositif de vérification (10 ; 110) d'une longueur (L) de la portion dénudée du câble, le dispositif de vérification comprenant un premier espace d'accueil (12 ; 112) délimité par une butée et par un repère qui sont distants d'une longueur de référence, le dispositif de vérification étant agencé de sorte que, lorsque la portion dénudée est positionnée dans le premier espace d'accueil (12 ; 112) et qu'un premier élément de câble parmi l'extrémité libre du câble et l'épaulement du câble vient en appui contre la butée, un deuxième élément de câble parmi l'extrémité libre et l'épaulement du câble est positionné par rapport au repère de manière à permettre une comparaison visuelle entre la position du deuxième élément de câble et la position du repère, et donc entre la longueur de la portion dénudée du câble et la longueur de référence, le premier espace d'accueil étant une première cavité (12 ; 112) pratiquée sur une face (11 ; 111) de la pièce de boîtier, la forme de la première cavité (12 ; 112) étant une portion de cylindre coupé par un plan parallèle à un axe du cylindre, de sorte que la première cavité présente une forme complémentaire de la forme de la portion dénudée (7 ; 107) du câble.

2. Equipement électrique selon la revendication 1, dans lequel le dispositif de vérification comprend un premier élément de boîtier et un deuxième élément de boîtier qui peuvent chacun former la butée ou le repère.

3. Equipement électrique selon la revendication 2, dans lequel le premier élément de boîtier est un fond (16) de la cavité et le deuxième élément de boîtier est un bord (14) de la pièce de boîtier.

4. Equipement électrique selon la revendication 3, dans lequel, lorsque la longueur de la portion dénudée est supérieure à la longueur de référence, le fond (16) de la cavité (12) forme la butée et le bord (14) de la pièce de boîtier forme le repère, et dans lequel, lorsque la longueur de la portion dénudée est inférieure à la longueur de référence, le fond de la cavité forme le repère et le bord de la pièce de boîtier forme la butée.

5. Equipement électrique selon la revendication 1, dans lequel des rainures longitudinales (18) parallèles à l'axe du cylindre sont formées dans la première cavité (12).

6. Equipement électrique selon la revendication 2, comprenant en outre une deuxième cavité (113) ayant une largeur supérieure à celle de la première cavité (112), la deuxième cavité formant un deuxième espace d'accueil agencé pour accueillir une portion non dénudée du câble lorsque la portion dénudée est positionnée dans la première cavité (112), le premier élément de boîtier étant un épaulement de boîtier (117) formé à la limite entre la première cavité et la deuxième cavité, et le deuxième élément de boîtier étant un bord (114) de la pièce de boîtier.

7. Equipement électrique selon l'une des revendications précédentes, la pièce de boîtier étant une pièce amovible.

8. Equipement électrique selon l'une des revendications précédentes, l'équipement électrique étant un compteur électrique (1 ; 101).

9. Equipement électrique selon les revendications 7 et 8, la pièce de boîtier étant un couvre-bornes (4 ; 104).

10. Procédé de connexion d'un câble à un équipement électrique selon l'une des revendications précédentes, comportant les étapes de :
- dénuder le câble ;
- insérer la portion dénudée dans le premier espace d'accueil, de sorte que le premier élément de câble parmi l'extrémité libre du câble et l'épaulement du câble vient en appui contre la butée ;
- réaliser une comparaison visuelle entre la position du deuxième élément de câble et la position du repère, de manière à vérifier que la longueur de la portion dénudée du câble correspond à la longueur de référence ;
- si ce n'est pas le cas, couper l'extrémité du câble ou bien dénuder à nouveau le câble pour que la longueur de la portion dénudée du câble corresponde bien à la longueur de référence ;
- connecter la portion dénudée du câble au connecteur de l'équipement électrique.

## Patentansprüche

1. Elektrisches Gerät (1; 101), umfassend ein Gehäuse (2; 102) und einen Verbinder, mit dem ein abisolierter Abschnitt (7; 107) eines Kabels (3; 103) verbunden werden kann, der einen elektrischen Leiter (6; 106) umfasst, der von einem Mantel (5; 105) umgeben ist, wobei sich der genannte abisolierte Abschnitt zwischen einem freien Ende (8; 108) des Kabels und einer Schulter (9; 109) des Kabels erstreckt, die von einem abgetrennten Ende des Mantels gebildet ist, wobei das Gehäuse einen Gehäuseteil (4; 104) umfasst, an dem eine Verifikationsvorrichtung (10; 110) mit einer Länge (L) des abisolierten Abschnitts des Kabels gebildet ist, wobei die Verifikationsvorrichtung einen ersten Aufnahmeraum (12; 112) umfasst, der von einem Anschlag und von einem Bezugspunkt begrenzt ist, die um eine Referenzlänge entfernt sind, wobei die Verifikationsvorrichtung derart ausgebildet ist, dass, wenn der abisolierte Abschnitt in dem ersten Aufnahmeraum (12; 112) positioniert ist und wenn ein erstes Kabelelement unter dem freien Ende des Kabels und der Schulter des Kabels an dem Anschlag zur Anlage kommt, ein zweites Kabelelement unter dem freien Ende und der Schulter des Kabels derart in Bezug auf den Bezugspunkt positioniert ist, dass es einen visuellen Vergleich zwischen der Position des zweiten Kabelelements und der Position des Bezugspunktes und folglich zwischen der Länge des abisolierten Abschnitts des Kabels und der Referenzlänge ermöglicht, wobei der erste Aufnahmeraum ein erster Hohlraum (12; 112) ist, der auf einer Fläche (11; 111) des Gehäuseteils ausgebildet ist, wobei die Form des ersten Hohlraums (12; 112) ein Zylinderabschnitt ist, der von einer Ebene geschnitten wird, die parallel zu einer Achse des Zylinders ist, sodass der erste Hohlraum eine Form aufweist, die komplementär zur Form des abisolierten Abschnitts (7; 107) des Kabels ist.

2. Elektrisches Gerät nach Anspruch 1, bei dem die Verifikationsvorrichtung ein erstes Gehäuseelement und ein zweites Gehäuseelement umfasst, die jeweils den Anschlag oder den Bezugspunkt bilden können.

3. Elektrisches Gerät nach Anspruch 2, bei dem das erste Gehäuseelement ein Boden (16) des Hohlraums und das zweite Gehäuseelement ein Rand (14) des Gehäuseteils ist.

4. Elektrisches Gerät nach Anspruch 3, bei dem, wenn die Länge des abisolierten Abschnitts größer als die Referenzlänge ist, der Boden (16) des Hohlraums (12) den Anschlag und der Rand (14) des Gehäuseteils den Bezugspunkt bildet, und bei dem, wenn die Länge des abisolierten Abschnitts kürzer als die Referenzlänge ist, der Boden des Hohlraums den Bezugspunkt und der Rand des Gehäuseteils den Anschlag bildet.

5. Elektrisches Gerät nach Anspruch 1, bei dem Längsnuten (18), die parallel zur Achse des Zylinders sind, in dem ersten Hohlraum (12) ausgebildet sind.

6. Elektrisches Gerät nach Anspruch 2, ferner umfassend einen zweiten Hohlraum (113), der eine Breite hat, die größer als die des ersten Hohlraums (112) ist, wobei der zweite Hohlraum einen zweiten Aufnahmeraum bildet, der ausgebildet ist, um einen nicht abisolierten Abschnitt des Kabels aufzunehmen, wenn der abisolierte Abschnitt in dem ersten Hohlraum (112) positioniert ist, wobei das erste Gehäuseelement eine Gehäuseschulter (117) ist, die an der Grenze zwischen dem ersten Hohlraum und dem zweiten Hohlraum ausgebildet ist, und das zweite Gehäuseelement ein Rand (114) des Gehäuseteils ist.

7. Elektrisches Gerät nach einem der vorhergehenden Ansprüche, bei dem das Gehäuseteil ein abnehmbares Teil ist.

8. Elektrisches Gerät nach einem der vorhergehenden Ansprüche, bei dem das elektrische Gerät ein elektrischer Zähler (1; 101) ist.

9. Elektrisches Gerät nach den Ansprüchen 7 und 8, bei dem der Gehäuseteil eine Klemmenabdeckung (4; 104) ist.

10. Verbindungsverfahren zum Verbinden eines Kabels mit einem elektrischen Gerät nach einem der vorhergehenden Ansprüche, umfassend die Schritte:
- Abisolieren des Kabels;
- Einfügen des abisolierten Abschnitts in den ersten Aufnahmeraum, derart, dass das erste Kabelelement unter dem freien Ende des Kabels und der Schulter des Kabels an dem Anschlag zur Anlage kommt;
- Durchführen eines visuellen Vergleichs zwischen der Position des zweiten Kabelelements und der Position des Bezugspunktes, um zu verifizieren, dass die Länge des abisolierten Abschnitts des Kabels der Referenzlänge entspricht;
- wenn dies nicht der Fall ist, Abschneiden des Endes des Kabels oder auch erneutes Abisolieren des Kabels, damit die Länge des abisolierten Abschnitts des Kabels der Referenzlänge gut entspricht;
- Verbinden des abisolierten Abschnitts des Kabels mit dem Verbinder des elektrischen Geräts.

## Claims

1. Electrical equipment (1; 101) comprising a housing (2; 102) and a connector to which there can be connected a stripped portion (7; 107) of a cable (3; 103) that comprises an electrical conductor (6; 106) surrounded by a sheath (5; 105), said stripped portion extending between a free end (8; 108) of the cable and a shoulder (9; 109) of the cable formed by a cut end of the sheath, the housing including a housing part (4; 104) having formed therein a verification device (10; 110) for verifying the length (L) of the stripped portion of the cable, the verification device including a first reception space (12; 112) defined by an abutment and by a reference that are spaced apart by a reference length, the verification device being arranged in such a manner that, when the stripped portion is positioned in the first reception space (12; 112) and a first cable element selected from the free end of the cable and the shoulder of the cable comes to bear against the abutment, a second element of the cable selected from the free end and the shoulder of the cable is positioned relative to the reference in such a manner as to enable a visual comparison to be made between the position of the second cable element and the position of the reference, and thus between the length of the stripped portion of the cable at the reference length, wherein the first reception space is a first cavity (12; 112) formed in a face (11; 111) of the housing part, wherein the shape of the first cavity (12; 112) is a cylinder portion intersected by a plane parallel to the axis of the cylinder, such that the first cavity presents a shape that is complementary to the shape of the stripped portion (7; 107) of the cable.

2. Electrical equipment according to claim 1, wherein the verification device comprises a first housing element and a second housing element, each of which can form the abutment or the reference.

3. Electrical equipment according to claim 2, wherein the first housing element is an end wall (16) of the cavity, and the second housing element is an edge (14) of the housing part.

4. Electrical equipment according to claim 3, wherein when the length of the stripped portion is longer than the reference length, the end wall (16) of the cavity (12) forms the abutment and the edge (14) of the housing part forms the reference, and wherein, when the length of the stripped portion is shorter than the length of the reference, the end wall of the cavity forms the reference and the edge of the housing part forms the abutment.

5. Electrical equipment according to claim 1, wherein longitudinal grooves (18) parallel to the axis of the cylinder are formed in the first cavity (12).

6. Electrical equipment according to claim 2, further including a second cavity (113) of width greater than the width of the first cavity (112), the second cavity forming a second reception space arranged to receive a non-stripped portion of the cable when the stripped portion is positioned in the first cavity (112), the first housing element being a housing shoulder (117) formed at the boundary between the first cavity and the second cavity, and the second housing element being an edge (114) of the housing part.

7. Electrical equipment according to any preceding claim, the housing part being a removable part.

8. Electrical equipment according to any preceding claim, the electrical equipment being an electricity meter (1; 101) .

9. Electrical equipment according to claims 7 and 8, the housing part being a terminal cover (4; 104).

10. A method of connecting a cable to electrical equipment according to any preceding claim, the method comprising the steps of:
• stripping the cable;
• inserting the stripped portion in the first reception space so that the first cable element from among the free end of the cable and the shoulder of the cable comes to bear against the abutment;
• visually comparing the position of the second cable element and the position of the reference so as to verify that the length of the stripped portion of the cable corresponds to the reference length;
• if the lengths do not correspond, cutting off the end of the cable or else stripping the cable once more so that the length of the stripped portion of the cable does indeed correspond to the reference length;
• connecting the stripped portion of the cable to the connector of the electrical equipment.
